(19) Europäisches Patentamt

European Patent Office

Office européen des brevets

(11) Veröffentlichungsnummer: **0 167 052 B1**

(12) **EUROPÄISCHE PATENTSCHRIFT**

(45) Veröffentlichungstag der Patentschrift:
**11.05.88**

(21) Anmeldenummer: **85107491.4**

(22) Anmeldetag: **05.07.83**

(60) Veröffentlichungsnummer der früheren Anmeldung
nach Art. 76 EPÜ: **0098586**

(51) Int. Cl.⁴: **F 27 D 3/10,** F 27 B 7/32,
B 65 G 69/18, F 23 G 5/00,
B 01 J 8/00

(54) **Vorrichtung zum Beschicken eines Ofens, insbesondere eines Drehrohrofens, mit zu verbrennendem Gut, insbesondere Abfällen.**

(30) Priorität: **06.07.82 DE 3225281**

(43) Veröffentlichungstag der Anmeldung:
**08.01.86 Patentblatt 86/2**

(45) Bekanntmachung des Hinweises auf die Patenterteilung:
**11.05.88 Patentblatt 88/19**

(84) Benannte Vertragsstaaten:
**AT BE CH FR GB IT LI NL**

(56) Entgegenhaltungen:
**DE - A - 1 934 916**
**DE - A - 2 101 171**
**DE - C - 144 196**
**DE - C - 226 707**
**FR - A - 654 415**

(73) Patentinhaber: **Deutsche Kommunal-Anlagen Miete GmbH, c/o Deutsche Anlagen-Leasing GmbH Wilhelm-Theodor-Römheid-Strasse 30, D-6500 Mainz (DE)**

(72) Erfinder: **Hillekamp, Klaus, Dr., Musäusstrasse 3, D-8000 München 60 (DE)**

(74) Vertreter: **Tetzner, Volkmar, Dr.-ing. Dr. jur., Van-Gogh-Strasse 3, D-8000 München 71 (DE)**

EP 0 167 052 B1

## Beschreibung

Die in der vorliegenden Patentanmeldung beschriebene Erfindung betrifft eine Verbesserung der in der DE-OS 3 004 557, auf deren Inhalt hier ausdrücklich Bezug genommen wird, beschriebenen Vorrichtung zum Beschicken eines Reaktors, insbesondere eines Drehrohrofens, mit thermisch zu behandelndem Gut, insbesondere Abfällen, mit einem Zuführungskanal, durch den mittels eines hin- und herbewegten Stössels das über einen Füllbehälter in den Zuführungskanal eingebrachte Gut dem Reaktor zugeführt wird, und mit Dichtungseinrichtungen, die ein Eindringen und/oder Entweichen von Gasen in den bzw. aus dem Reaktor verhindern.

In dieser bekannten Vorrichtung ist zusätzlich zum Füllbehälter ein Schüttbehälter vorgesehen, der zwischen einer über dem Füllbehälter liegenden Entladestellung und einer seitlich vom Füllbehälter liegenden Beladestellung hin- und herbewegbar ist und am Boden eine verschliessbare Schüttöffnung und einen sowohl die nach oben gerichtete Füllöffnung des Füllbehälters als auch die Schüttöffnung des Schüttbehälters umfassenden Tauchverschluss, der mit einem umlaufenden Tauchrand in eine die nach oben gerichtete Füllöffnung des Füllbehälters umfassende Sperrflüssigkeit sowohl beim Beladen des Schüttbehälters mit dem thermisch zu behandelnden Gut bei dessen geschlossener Schüttöffnung und beim Entladen des Gutes aus dem Schüttbehälter durch die geöffnete Schüttöffnung in den Füllbehälter bei gasdicht verschlossener, nach oben gerichteter Beladeöffnung des Schüttbehälters als auch bei der Hin- und Herbewegung des Schüttbehälters zwischen diesen beiden Stellungen eingetaucht bleibt, sowie einen weiteren, nur die Schüttöffnung umfassenden Tauchverschluss mit einem Tauchrand aufweist.

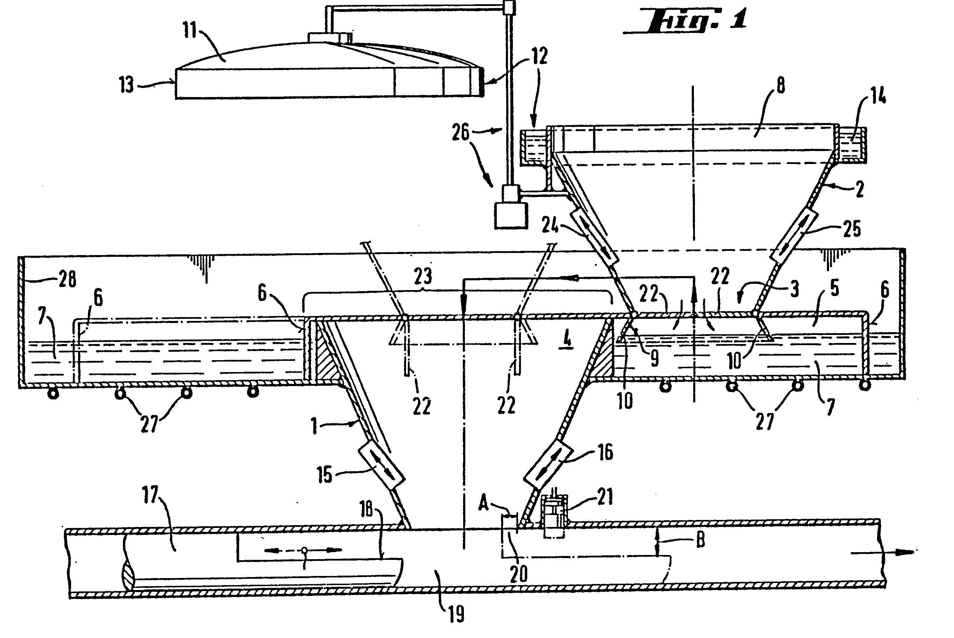

Diese in der DE-OS 3 004 557 beschriebene Vorrichtung zum Beschicken eines Reaktors der vorgenannten Art, die in der Fig. 1 der beiliegenden Zeichnungen in schematischer Form dargestellt ist, erlaubt eine hermetische Abdichtung bei der Beschickung des Reaktors mit weniger störanfälligen Mitteln und damit einen längeren wartungsfreien Betrieb.

Beim technischen Betrieb dieser Anlage hat sich jedoch gezeigt, dass nicht nur beim Schliessen des Deckels des Schüttbehälters, sondern auch beim notwendigen Absenken des Schüttbehälters zur Erzielung eines gasdichten Verschlusses der Schüttöffnung des Schüttbehälters Volumenverdrängungen auftreten, die zur Folge haben, dass der Druck im Reaktor ansteigt, und beim zu schnellen Absenken die verdrängte Luft bzw. Gas unter dem Rand der Tauchglocke herausgedrückt wird. Die Druckerhöhung im Reaktor stellt beim Reaktorbetrieb eine zusätzliche Störgrösse dar, die regelungstechnisch über eine Drosselklappe im Gasauslass des Reaktors kompensiert werden muss. Während der beim Schliessen des Deckels des Schüttbehälters auftretende Druckanstieg im Reaktor aufgrund des verdrängten kleineren Volumens gerade noch kompensiert werden kann, insbesondere wenn der Deckel langsam geschlossen wird, tritt beim Absenken des Schüttbehälters im Reaktor eine Druckspitze auf, die regelungstechnisch nicht abgefangen werden kann. Zwar kann das Herausquellen der verdrängten Luft/Gas unter den Wassertassendeckeln durch sehr langsames Absenken des Schüttbehälters verhindert werden, der Reaktorbetrieb wird dadurch aber in nicht unerheblichem Ausmass behindert.

Es wurde nun gefunden, dass die vorgenannten Probleme gemäss der vorliegenden Patentanmeldung dadurch gelöst werden können, dass, anstatt den hin- und herbewegbaren Schüttbehälter so weit abzusenken, dass die am unteren Ende des Schüttbehälters vorgesehenen Schürzen in das Sperrflüssigkeitsbad eintauchen und dort einen gasdichten Abschluss bilden, der gasdichte Abschluss dadurch erzielt wird, dass der Schüttbehälter über dem Füllbehälter fest montiert ist und der Füllbehälter mit einem umlaufenden Wassertassen-Tauchverschluss für die Aufnahme der Sperrflüssigkeit versehen ist, in die der Rand eines innerhalb eines gasdichten Zwischenbehälters hin- und herbeweglichen Deckels zum gasdichten Verschliessen der Füllöffnung des Füllbehälters beim Beladen des Schüttbehälters bei verschlossener Schüttöffnung eintaucht, wodurch ein gasdichter Abschluss erreicht wird.

Gegenstand der vorliegenden Patentanmeldung ist daher eine Vorrichtung zum Beschicken eines Reaktors, insbesondere eines Drehrohrofens, mit thermisch zu behandelndem Gut, insbesondere Abfällen, mit einem Zuführungskanal durch den mittels eines hin- und herbewegten Stössels das über einen Füllbehälter in den Zuführungskanal eingebrachte Gut dem Reaktor zugeführt wird, und mit Dichtungseinrichtungen, die ein Eindringen und/oder Entweichen von Gasen in den bzw. aus dem Reaktor verhindern, in der zusätzlich zum Füllbehälter ein Schüttbehälter vorgesehen ist, der am Boden eine verschliessbare Schüttöffnung und einen sowohl die nach oben gerichtete Füllöffnung des Füllbehälters als auch die Schüttöffnung des Schüttbehälters umfassenden Verschluss aufweist, der sowohl beim Beladen des Schüttbehälters mit dem thermisch zu behandelnden Gut bei dessen geschlossener Schüttöffnung als auch beim Entladen des Gutes aus dem Schüttbehälter durch die geöffnete Schüttöffnung in den Füllbehälter bei gasdicht verschlossener, nach oben gerichteter Beladeöffnung des Schüttbehälters gasdicht verschlossen bleibt, die dadurch gekennzeichnet ist, dass der Schüttbehälter über dem Füllbehälter fest montiert ist und der Füllbehälter mit einem umlaufenden Wassertassen-Tauchverschluss für die Aufnahme der Sperrflüssigkeit versehen ist, in die der Rand eines innerhalb eines gasdichten Zwischenbehälters hin- und herbeweglichen Deckels zum gasdichten Verschliessen der Füllöffnung des Füllbehälters beim Beladen des Schüttbehälters bei verschlossener Schüttöffnung eintaucht.

Auf diese Weise kann die gesamte Eintragskonzeption wesentlich vereinfacht werden, weil dabei ein Absenken des Schüttbehälters, das einen grossen mechanischen Aufwand erfordert und bei dem die obengenannten Druckprobleme auftreten, nicht mehr erforderlich ist.

Die beim Verschliessen des Deckels des Schüttbehälters auftretenden Volumenverdrängungsprobleme können dadurch gelöst werden, dass die Sperrflüssigkeit in dem zum gasdichten Verschliessen des Deckels des Schüttbehälters vorgesehenen Tauchverschluss, vorzugsweise Wasser, vor dem Schliessen des Deckels zunächst abgelassen wird, so dass die verdrängte Luft aus dem Verschluss entweichen kann, wonach bei geschlossenem Deckel die Sperrflüssigkeit wieder in die Wassertasse hineingepumpt wird, um einen gasdichten Abschluss des Deckels des Füllbehälters zu erzielen. Durch eine Füllstandsmessung wird sichergestellt, dass genau der Füllstand in dem Wassertassenverschluss des Deckels erreicht wird, der für den gasdichten Abschluss erforderlich ist. Die Füllstandshöhe in der Wassertasse wird so gewählt, dass den im Reaktor auftretenden minimalen und maximalen Drucken Rechnung getragen wird.

Der Druckausgleich kann vorzugsweise auch dadurch erzielt werden, dass in dem umlaufenden Tauchverschluss ein durch den Tauchrand des Deckels abklemmbarer Durchgang zwischen dem Innenraum des Schüttbehälters und der äusseren Atmosphäre vorgesehen wird, der bei geöffnetem Deckel geöffnet ist und bei sich schliessendem Deckel des Füllbehälters durch den in den Tauchverschluss eintauchenden Rand des Deckels abgeklemmt wird, wodurch ein gasdichter Verschluss erzielt wird.

Der umlaufende Tauchverschluss des Deckels des Schüttbehälters kann über ein mit Regeleinrichtungen (beispielsweise einer Pumpe, einem Magnetventil und einer Füllstandsmessung mit Endkontakten versehenes Leitungssystem) mit dem unteren Verschluss des Schüttbehälters in Flüssigkeitsverbindung stehen zum steuerbaren Entleeren und Füllen des oberen Tauchverschlusses des Schüttbehälters mit der Sperrflüssigkeit. Das Ablassen und Einfüllen der Sperrflüssigkeit in den erforderlichen Mengen kann auf eine dem Fachmann bekannte Weise erfolgen.

Volumenverdrängungsprobleme treten dabei nicht auf, da beim Absenken des Deckels zum Verschliessen der Füllöffnung des Füllbehälters die Luft aus den Wassertassen jeweils entweichen kann, da diese nicht gefüllt sind. Erst nachdem der Deckel abgesenkt worden ist, wird die Sperrflüssigkeit in die Wassertasse eingepumpt, wodurch ein gasdichter Abschluss erzielt wird. Beim Ablassen der Sperrflüssigkeit aus der Wassertasse läuft diese in einen Sammelbehälter, in dem ein Überlauf vorgesehen sein kann, da beim Füllvorgang immer wieder Staub und kleinere Abfallteilchen in die Wassertasse geraten, die mit der Sperrflüssigkeit ausgeschwemmt werden und sich dann im Sammelbehälter absetzen können. Auch in diesem Fall ist es möglich, die Wasserstände in der Wassertasse über Füllstandsmessungen zu kontrollieren und die Flüssigkeitszufuhr bzw. -ableitung entsprechend zu schliessen oder zu öffnen.

Der technische Vorteil der Vorrichtung der Erfindung ergibt sich daraus, dass dabei der Schüttbehälter weder angehoben noch abgesenkt und auch nicht mehr hin- und hergefahren werden muss, das heisst, über dem Füllbehälter fest montiert sein kann. Dadurch kann der mechanische Aufbau der gesamten Vorrichtung erheblich vereinfacht werden. Hinzu kommt, dass das Flüssigkeitsvolumen in den Wassertassen äusserst gering ist, so dass nur noch wenig Sperrflüssigkeit verwendet zu werden braucht, die durch geeignete Massnahmen beim Winterbetrieb gegen Erstarren bzw. Einfrieren leicht geschützt werden kann. Das Ablassen der Sperrflüssigkeit aus der Wassertasse hat zudem den Vorteil, dass innerhalb der Wassertassen auch bei ständigem Betrieb in der Vorrichtung sich kein Schmutz ansammelt. Das Volumen des Zwischenbehälters, in dem der Abschlussdeckel zum Verschliessen der Füllöffnung des Füllbehälters hin- und herbewegt wird, kann auf ein Minimum reduziert werden, was für die Inertisierung zwischen den Füllvorgängen sehr vorteilhaft ist.

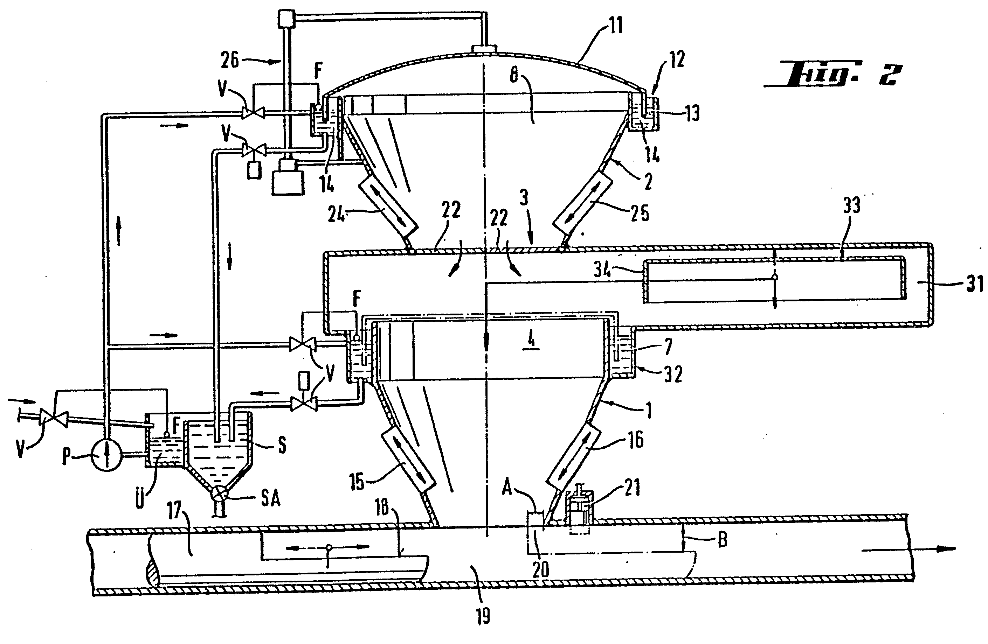

Die Erfindung wird nachstehend unter Bezugnahme auf die Fig. 1 und 2 der beiliegenden Zeichnungen näher erläutert. Dabei zeigen:

Fig. 1 eine schematische Darstellung einer Beschickungsvorrichtung gemäss DE-OS 3 004 557, wobei der Schüttbehälter sich in seiner Beladestellung befindet; und

Fig. 2 eine schematische Darstellung einer Beschickungsvorrichtung gemäss dem Vorschlag der vorliegenden Patentanmeldung, bei der Füll- und Schüttbehälter fest übereinander angeordnet sind.

Die in den beiliegenden Zeichnungen dargestellten Beschickungsvorrichtungen für einen nicht dargestellten Reaktor weisen einen Füllbehälter 1, über den in einen Zuführungskanal 19 zu behandelndes Gut, beispielsweise Abfälle, eingebracht werden können, auf. Mit Hilfe eines im Zuführungskanal 19 hin- und herbeweglichen Stössels 17 kann das im Zuführungskanal 19 befindliche Gut in den Reaktor eingebracht werden.

In Fig. 1 ist ein mit einer Hub- und Schwenkeinrichtung 26 ausgestatteter Schüttbehälter 2 dargestellt, der in der in Fig. 1 gezeigten Stellung bei abgehobenem Deckel 11 beladen werden kann. In der Beladestellung ist eine Schüttöffnung 3 durch Klappen 22 verschlossen. Die Klappen 22 werden in der Entladestellung nach unten geschwenkt, so dass die Schüttöffnung 3 frei wird und das in den Schüttbehälter 2 eingebrachte Gut in den Füllbehälter 1 entleert werden kann.

Am Schüttbehälter 2 ist ein Tauchverschluss 5 vorgesehen, der in eine Sperrflüssigkeit 7, die sich in einer Tauchtasse 28 befindet, mit seinem Tauchrand 6 eingetaucht ist. Die Sperrflüssigkeit 7 umgibt eine nach oben gerichtete Füllöffnung 4 des Füllbehälters 1, und diese Füllöffnung 4 wird auch vom Tauchverschluss 5 bzw. dessen Tauchrand 6 umfasst. Wie aus der Fig. 1 zu ersehen ist, wird vom Tauchverschluss 5 die Füllöffnung 4 sowohl in der Beladestellung des Schüttbehälters 2 als auch in der Entladestellung des Schüttbehälters 2 abgedeckt. Diese Abdeckung bzw. dieser Verschluss nach aussen bleibt auch aufrechterhalten während der Hin- und Herbewegung des Füllbehälters 2 zwischen der Beladestellung und der Entladestellung. Hierzu ist der Tauchverschluss 5 mit dem entsprechend bemessenen umlaufenden Tauchrand 6 ausgestattet, der immer in die Sperrflüssigkeit 7 eingetaucht bleibt, wobei bei der Eintauchtiefe die im Reaktor herrschenden Druckverhältnisse entsprechend zu berücksichtigen sind. Damit gewährleistet wird, dass der Tauchverschluss 5 auch in der in der Fig. 1 dargestellten Beladestellung des Schüttbehälters 2 die Füllöffnung 4 des Füllbehälters 1 abdeckt und nach aussen abdichtet, besitzt der Tauchverschluss 5 ein entsprechend bemessenes Ansatzstück 23, durch das in der Fig. 1 gewährleistet wird, dass auch während des Beladens des Behälters 2 die Füllöffnung 4 des Füllbehälters 1 in die Abdichtung mit einbezogen ist.

Mit Hilfe einer Heizvorrichtung 27, die in Form einer Schlange ausgebildet sein kann und unterhalb der Tauchtasse 28 angeordnet ist, kann im Winterbetrieb die Sperrflüssigkeit 7 beheizt werden, um ein Einfrieren zu verhindern. Die Beheizung kann mit Hilfe der Reaktorabgase erfolgen oder auch mit einem Wärmeträger, wie Öl, der durch die Schlange der Heizeinrichtung 27 hindurchgeschickt wird.

Am unteren Teil des Schüttbehälters 2 ist ein weiterer Tauchverschluss 9 vorgesehen, dessen umlaufender Tauchrand 10, der die Schüttöffnung 3 und die darin befindlichen Klappen 22 umgibt, während der Beladestellung des Schüttbehälters 2, wie in der Fig. 1 dargestellt, in die Sperrflüssigkeit 7 eingetaucht ist. Auf diese Weise wird ein Zutritt und ein Entweichen von Gas durch undichte Stellen des Klappenverschlusses 22 in der Schüttöffnung 3 vermieden.

Beim Entleeren des Schüttbehälters 2 in der nicht dargestellten Entladestellung ist die Füllöffnung 8 des Schüttbehälters durch den Deckel 11 abgedeckt. Zur Abdichtung kann auch hier ein Tauchverschluss 12 am Deckel vorgesehen sein, dessen umlaufender Rand 13 in eine am oberen Teil des Schüttbehälters 2 vorgesehene Sperrflüssigkeit 14 eingetaucht ist. Die Sperrflüssigkeit 14 umgibt die Füllöffnung 8. Vor dem Entleeren ist es sinnvoll, die nach dem Verschliessen im Schüttbehälter 2 verbliebene Luft weitgehend durch Inertgas zu verdrängen. Nach dem Entleeren des Schüttbehälters 2 wird dieser wiederum in die in der Fig. 1 dargestellte Beladestellung gebracht und der Tauchverschluss 9 in die Sperrflüssigkeit 7 eingetaucht. Bevor der Deckel 11 für die Wiederbeladung abgehoben wird, kann der Schüttbehälter 2 nun zunächst ausgespült werden, um eventuell beim Entleeren in diesen gelangte Schadgase zu entfernen.

Um eine Brückenbildung im Füllbehälter 1 sowie im Schüttbehälter 2 zu verhindern, können in den schrägen Seitenwänden Raumstössel 15 und 16 bzw. 24 und 25 angeordnet sein, die in die Behälterräume wechselweise hineinbewegt werden können. Ferner kann am Füllbehälter 1 eine nicht näher dargestellte Füllstandsmesseinrichtung vorgesehen sein, so dass in Abhängigkeit von der Füllstandsmessung die Zuführung des Gutes aus dem Schüttbehälter 2 gesteuert werden kann. Insofern kann der Füllbehälter 1 als Zwischenbehälter wirken, durch den eine gesteuerte Zuführung des zu behandelnden Gutes gewährleistet wird.

Dadurch, dass der zusätzliche Schüttbehälter 2 vorgesehen ist, ist eine Kranbeschickung desselben über eine Schurre möglich. Der Greiferinhalt des Krans ist dabei auf das Schüttbehältervolumen abzustimmen. Insofern können dann störanfällige Zwischentransportmittel entfallen.

Um ein Abscheren von festen Teilen im Übergangsbereich zwischen dem Füllbehälter 1 und dem Zuführungsrohr 19 zu verhindern, besitzt der Stössel 17 eine Ausnehmung 18, die so bemessen ist, dass bei der vorderen Stösselstellung, welche in der Fig. 1 gestrichelt dargestellt ist, ein Abstand B zwischen dem Füllbehälter 1 und dem Zuführungsrohr 19 geschaffen wird. Zum anderen wird der Stössel 17 mit der Ausnehmung 18 nur so weit in den Zuführkanal hereingeschoben, dass zwischen der Vorderkante des Vollstössels und dem Zuführkanal ein Abstand A und im Bereich der Ausnehmung ein Freiraum B zwischen dem eingeschobenen Stösselteil und dem Zuführungskanal 19 verbleibt.

Durch eine in der Nähe des Übergangsbereiches 20 vorgesehene Abstreifeinrichtung 21 wird verhindert, dass das Gut, das sich bereits in dem zum Reaktor geführten Teil des Zuführungskanals befindet, vom zurückgeführten Stössel 17 mitgenommen wird. Es kann sich dabei um einen Rechen oder um eine Abschabkante oder einen Niederhalter handeln. Diese Abstreifeinrichtung wird während des Zurückziehens des Stössels in das Zuführungsrohr 19 eingeschoben. Mit dem Niederhalter können auch sperrige Teile, die wider Erwarten in den Füllbehälter gelangt sind und die Zufuhr des Gutes zum Reaktor behindern, so niedergedrückt werden, dass der Stössel sie stirnseitig erfassen kann, um sie so in den Reaktor zu schieben.

Beim Beschicken lässt sich die folgende Arbeitsweise der in Fig. 1 dargestellten Vorrichtung durchführen:

Während der Schüttbehälter 2 sich in der in der Fig. 1 gezeigten Beladestellung befindet, bewegt sich der Stössel 17 im Führungskanal 19 hin und her, wodurch das im Füllbehälter 1 befindliche Gut aus diesem allmählich entleert wird und in aufgelockertem Zustand dem Reaktor zugeführt werden kann. Wie eingangs schon erwähnt, lässt sich hierdurch der Wirkungsgrad des Reaktors bei der thermischen Behandlung des Gutes erheblich steigern, da der Reaktorraum besser genutzt wird. Mit Hilfe einer nicht näher beschriebenen Füllstandsmesseinrichtung lässt sich der Füllungsgrad im Füllbehälter 1 feststellen und in Abhängigkeit davon der beladene Schüttbehälter 2, auf welchem der Deckel 11 gasdicht aufgesetzt ist, in die nicht dargestellte Entladestellung verbringen. Vor dem Entleeren kann die im Leerraum des Schüttbehälters 2 verbliebene Luft durch Inertgas verdrängt werden. Zur Entleerung des Schüttbehälters 2 werden die Klappen 22 geöffnet und das Gut in den als Zwischenbehälter wirkenden Füllbehälter 1 eingebracht. Die Klappen 22 werden wieder verschlossen und der Schüttbehälter wird in die Beladestellung zurückgebracht. Bevor der Deckel 11 abgehoben wird, kann der Schüttbehälter 2 noch ausgespült werden, um evtl. beim Entleerungsvorgang in diesen gelagerte Schadgase zu entfernen. Anschliessend kann der Schüttbehälter 2 dann wieder beladen werden.

Um den Schüttbehälter 2 zwischen seinen beiden Stellungen hin- und herbewegen zu können, können Schienenführungen, die der Einfachheit halber nicht näher dargestellt sind, vorgesehen sein. Aufgrund des am Schüttbehälter 2 vorgesehenen Tauchverschlusses 9 ist es notwendig, dass der Schüttbehälter vom Verbringen aus der Beladestellung in die Entladestellung um einen bestimmten Betrag angehoben wird. Diese Hubbewegung kann durch Schienen oder durch ein ebenfalls nicht näher dargestelltes Kniehebelgelenk, welches am Schüttbehälter 2 beispielsweise über ein Parallellenkersystem angreift, ausgeführt werden.

Die in Fig. 2 der beiliegenden Zeichnungen dargestellte erfindungsgemässe Vorrichtung zum Beschicken eines Reaktors unterscheidet sich von der Vorrichtung gemäss DE-OS 3 004 557 dadurch, dass der Schüttbehälter 2 über dem Füllbehälter 1 fest montiert ist und der Füllbehälter 1 mit einem umlaufenden Wassertassen-Tauchverschluss 32 für die Aufnahme der Sperrflüssigkeit 7 versehen ist, in die der Rand 34 eines innerhalb eines gasdichten Zwischenbehälters 31 hin- und herbeweglichen Deckels 33 zum gasdichten Verschliessen der Füllöffnung 4 des Füllbehälters 1 beim Beladen des Schüttbehälters 2 eintaucht.

Der zum Verschliessen der nach oben gerichteten Beladeöffnung 8 des Schüttbehälters 2 vorgesehene Deckel 11 weist einen Tauchverschluss 12 auf, dessen umlaufender Tauchrand 13 in eine die Beladeöffnung 8 umfassende Sperrflüssigkeit eintauchen kann.

Der umlaufende Tauchverschluss 22 kann vorzugsweise einen durch den Tauchrand 13 des Deckels 11 abklemmbaren Durchgang zwischen dem Innenraum des Schüttbehälters 2 und der äusseren Atmosphäre zum Druckausgleich beim Schliessen des Deckels 11 aufweisen, der beispielsweise von einem Schlauch begrenzt sein kann, der durch den Tauchrand 13 des Deckels 11 beim Absenken desselben abgeklemmt wird, um so einen gasdichten Verschluss zu erzielen, und beim Abheben des Deckels 11 sich wieder öffnet.

Der umlaufende Tauchverschluss 12 kann aber auch über ein mit üblichen Regeleinrichtungen (z.B. einer Pumpe P, einem Magnetventil V, einer Füllstandsmessanzeige F) versehenes Leitungssystem mit dem Wassertassenverschluss 32 in Flüssigkeitsverbindung stehen zum steuerbaren Entleeren und Füllen des Tauchverschlusses 12 mit der Sperrflüssigkeit.

Der Wassertassenverschluss 32 des Füllbehälters 1 und der Tauchverschluss 12 des Schüttbehälters 2 stehen bei der dargestellten Ausführungsform mittels eines mit Regeleinrichtungen (beispielsweise einer Pumpe P, einem oder mehreren Magnetventilen V und einer oder mehrerer Füllstandsmessanzeigen F) versehenen Leitungssystems derart miteinander in Flüssigkeitsverbindung, dass beide Verschlüsse unabhängig voneinander entleert und gefüllt werden können. Die hierfür erforderlichen Einrichtungen sind dem Fachmann an sich bekannt und brauchen hier nicht näher beschrieben zu werden. Dies gilt auch für den in der Fig. 2 der beiliegenden Zeichnungen dargestellten Sammelbehälter S mit Überlauf Ü und Sumpfabzug SA, die vorgesehen sein können, um die beim Füllen immer wieder in die Verschlüsse gelangenden Staub- und sonstigen Abfallteilchen auszuschwemmen, die sich dann im Sammelbehälter S absetzen und abgezogen werden können. Dadurch wird sichergestellt, dass sich auch bei ständigem Betrieb der Vorrichtung innerhalb der Wassertassen-Verschlüsse kein Schmutz ansammelt.

Der Deckel 33 kann innerhalb des Zwischenbehälters 31 beim Be- und Entladen des Schüttbehälters 2 mechanisch, hydraulisch oder elektrisch seitlich hin- und herbewegt werden, um so den gasdichten Verschluss oder das Öffnen der Schüttöffnung 4 des Füllbehälters 1, je nach Wunsch, zu bewirken.

## Patentansprüche

1. Vorrichtung zum Beschicken eines Reaktors, insbesondere eines Drehrohrofens, mit thermisch zu behandelndem Gut, insbesondere Abfällen, mit einem Zuführungskanal (19), durch den mittels eines hin- und herbewegten Stössels (17) das über einen Füllbehälter (1) in den Zuführungskanal (19) eingebrachte Gut dem Reaktor zugeführt wird, und mit Dichtungseinrichtungen, die ein Eindringen und/oder Entweichen von Gasen in den bzw. aus dem Reaktor verhindern, in der zusätzlich zum Füllbehälter (1) ein Schüttbehälter (2) vorgesehen ist, der am Boden eine verschliessbare Schüttöffnung (3) und einen sowohl die nach oben gerichtete Füllöffnung (4) des Füllbehälters (1) als auch die Schüttöffnung (3) des Schüttbehälters (2) umfassenden Verschluss aufweist, der sowohl beim Beladen des Schüttbehälters (2) mit dem thermisch zu behandelnden Gut bei dessen geschlossener Schüttöffnung (3) als auch beim Entladen des Gutes aus dem Schüttbehälter (2) durch die geöffnete Schüttöffnung (3) in den Füllbehälter (1) bei gasdicht verschlossener, nach oben gerichteter Beladeöffnung (8) des Schüttbehälters (2) gasdicht verschlossen bleibt, dadurch gekennzeichnet, dass der Schüttbehälter (2) über dem Füllbehälter (1) fest montiert ist und der Füllbehälter (1) mit einem umlaufenden Wassertassen-Tauchverschluss (32) für die Aufnahme der Sperrflüssigkeit (7) versehen ist, in die der Rand (34) eines innerhalb eines gasdichten Zwischenbehälters (31) hin- und herbeweglichen Deckels (33) zum gasdichten Verschliessen der Füllöffnung (4) des Füllbehälters (1) beim Beladen des Schüttbehälters (2) bei verschlossener Schüttöffnung (3) eintaucht.

2. Vorrichtung nach Anspruch 1, dadurch gekennzeichnet, dass der Wassertassen-Verschluss (32) des Füllbehälters (1) und der Tauchverschluss (12) des Schüttbehälters (2) mittels eines mit Regeleinrichtungen versehenen Leitungssystems derart miteinander in Flüssigkeitsverbindung stehen, dass beide Verschlüsse unabhängig voneinander entleert und gefüllt werden können.

3. Vorrichtung nach Anspruch 1 und/oder 2, dadurch gekennzeichnet, dass der Deckel (33) innerhalb des Zwischenbehälters (31) beim Be- und Entladen des Schüttbehälters (2) mechanisch, hydraulisch oder elektrisch seitlich hin- und herbewegt werden kann.

## Claims

1. Apparatus for charging a reactor, particularly a rotary drum furnace, with material to be subjected to heat treatment, particularly scrap, with a delivery channel (19) through which the material introduced into the delivery channel (19) via a charging hopper (1) is delivered to the reactor by means of a ram (17) which can be moved to and fro, and with sealing arrangements which prevent penetration and/or escape of gases into or out of the reactor, in which in addition to the charging hopper (1) a delivery hopper (2) is provided which has a closable discharge port (3) on the base, as well as a closure which encloses both the upwardly-directed charging port (4) of the charging hopper (1) and the discharge port (3) of the delivery hopper (2) and remains closed so as to be gas-tight both during charging of the delivery hopper (2) with the material to be subjected to heat treatment when the discharge port (3) thereof is closed and during discharge of the material from the delivery hopper (2) through the opened discharge port (3) into the charging hopper (1) with the upwardly-directed charging port (8) of the delivery hopper (2) closed so as to be gas-tight, characterised in that the delivery hopper (2) is mounted so that it is fixed above the charging hopper (1) and providing the charging hopper (1) with a water seal immersion closure (32) around it to accommodate the sealing fluid (7) in which is immersed the edge (34) of a cover (33) which can move to and fro inside a gas-tight intermediate vessel (31) to form a gas-tight closure of the charging port (4) of the charging hopper (1) during charging of the delivery hopper (2) with the discharge port (3) closed.

2. Apparatus as claimed in claim 1, characterised in that the water seal closure (32) of the charging hopper (1) and the immersion closure (12) of the delivery hopper (2) are in fluid connection to one another by means of a ducting system provided with control arrangements in such a way that both closures can be emptied and filled independently of one another.

3. Apparatus as claimed in claims 1 and/or 2, characterised in that the cover (33) can be moved to and fro inside the intermediate vessel (31) during charging and discharging of the delivery hopper (2) by mechanical, hydraulic or electrical means.

**Revendications**

1. Installation de chargement d'un réacteur, en particulier d'un four tubulaire rotatif, par une matière devant subir un traitement thermique, en particulier par des déchets, installation comprenant un canal d'introduction (19) par lequel la matière introduite dans ce dernier par l'intermédiaire d'un bac de remplissage (1) est dirigée dans le réacteur au moyen d'un poussoir (17) animé d'un mouvement alternatif, ainsi que des dispositifs d'étanchéité qui interdisent la pénétration de gaz dans le réacteur et/ou leur échappement de ce dernier, ladite installation comprenant par ailleurs, en plus du bac de remplissage (1), un bac de déversement (2) dont le fond comporte un orifice obturable de décharge (3) ainsi qu'une fermeture entourant d'une part l'orifice d'entrée (4) orienté vers le haut, du bac de remplissage (1) et d'autre part, l'orifice de décharge (3) du bac de déversement (2), cette fermeture demeurant hermétiquement close aussi bien lorsque la matière devant subir le traitement thermique est chargée dans le bac de déversement (2), alors que l'ouverture de décharge (3) de ce dernier est fermée, que lorsque la matière est déchargée du bac de déversement (2), par son ouverture correspondante ouverte (3), dans le bac de remplissage (1), tandis que l'orifice de chargement (8), orienté vers le haut, du bac de déversement (2) est obturé hermétiquement, ladite installation étant caractérisée en ce que le bac de déversement (2) est monté en position fixe au-dessus du bac de remplissage (1) et ce dernier est équipé d'une fermeture circonférentielle hydraulique à rigole (32) destinée à loger le liquide d'étanchement (7) dans lequel plonge le rebord (34) d'un couvercle (33) mobile alternativement à l'intérieur d'une enceinte intermédiaire hermétique (31), ce couvercle étant destiné à obturer hermétiquement l'orifice d'entrée (4) du bac de remplissage (1) lors du chargement du bac de déversement (2) tandis que l'orifice de décharge (3) de ce dernier est fermé.

2. Installation selon la revendication 1, caractérisée en ce que la fermeture hydraulique à rigole (32) du bac de remplissage (1) et la fermeture par immersion (12) du bac de déversement (2) communiquent l'une avec l'autre par un système de canalisation équipé de dispositifs de réglage afin de permettre la circulation du liquide et de vider ou de remplir ces deux fermetures indépendamment l'une de l'autre.

3. Installation selon la revendication 1 et/ou 2, caractérisée en ce que le couvercle (33) peut être animé mécaniquement, hydrauliquement ou électriquement d'un mouvement latéral d'aller et de retour à l'intérieur de l'enceinte intermédiaire (31) pour le chargement et le déchargement du bac de déversement (2).

**Fig. 1**

0 167 052

**Fig. 2**